# EUROPEAN PATENT APPLICATION

(11) **EP 4 498 613 A1**
(43) Date of publication of application: **29.01.2025**
(21) Application number: 24190467.1
(22) Date of filing: 23.07.2024
(51) Int. Cl.: H04B 7/0404, G06N 3/02, G06N 20/00, H04B 7/06, H04B 7/08, H04B 17/309, H04L 25/02

(54) **ELECTRONIC DEVICE FOR PERFORMING BEAM MANAGEMENT ACCORDING TO CHANNEL STATE AND METHOD OF OPERATING THE SAME**

(30) Priority: 25.07.2023 KR 20230097060; 20.11.2023 KR 20230161432
(71) Applicant: SAMSUNG ELECTRONICS CO., LTD., Yeongtong-gu Suwon-si, Gyeonggi-do 16677 (KR)
(72) Inventor: KIM, Doyeon, 16677 Suwon-si (KR); LEE, Junho, 16677 Suwon-si (KR); CHONG, Dahae, 16677 Suwon-si (KR); CHOI, Yoojin, 16677 Suwon-si (KR)
(74) Representative: Marks & Clerk LLP

(57) **Abstract**

An electronic device includes memory; a communication module comprising an antenna array configured to form a plurality of candidate beams; and a processor connected to the communication module and the memory, the processor comprising a channel state classifier based on a neural network, wherein the processor is configured to: generate channel characteristic data based on information measured from the plurality of candidate beams for a signal received from a base station, input the channel characteristic data to the channel state classifier to infer a channel state between the electronic device and the base station, and reform the plurality of candidate beams based on the inferred channel state.

## Description

### BACKGROUND

The disclosure relates to an electronic device for performing beam management according to a channel state based on a neural network in a wireless communication system and a method of operating the same.

In a wireless communication system, an electronic device (e.g., a terminal) may transmit and receive data to and from an external device (e.g., a base station) through a beam formed by concentrating signals in a specific direction (e.g., beamforming). The electronic device may select an optimal beam to be applied to an antenna array for wireless communication through a beam training process that determines candidate beams in advance and compares measurement results for signal quality between a beam of the external device and the candidate beams of the electronic device. Currently, when a beam with a small beam width (hereinafter, referred to as a narrow beam, e.g. having a lower beam width or angular range than a "wide beam" used as a candidate beam in other situations) is used as the candidate beams, the electronic device may increase a beam matching-gain between the external device and the electronic device. However, when the narrow beam is used as at least one of the candidate beams of the electronic device, the number of candidate beams of which signal quality needs to be measured during beam training may increase. Therefore, excessive overhead may occur during a beam training process for all of the increased number of candidate beams. Such excessive overhead may cause a problem of deteriorating performance of the entire electronic device or a problem of deteriorating communication quality between the electronic device and the external device.

### SUMMARY

The embodiments of the present disclosure provide an electronic device for applying (e.g. inputting) channel characteristic data measured from a plurality of candidate beams of an electronic device to a pre-trained neural network to infer a channel state and to perform beam management corresponding to the inferred channel state and a method of operating the same.

A neural network (e.g. artificial neural network) is generally a model that is trained to make a prediction based on an input. A neural network may comprise a series of interconnected nodes (e.g. neurons). Each node receives a set of one or more inputs (e.g. from earlier connected nodes) and outputs a set of one or more outputs (e.g. to later connected nodes). Each node may process the input(s) to produce the output(s) based on an activation function. Each node may have an associated parameter (or weight) which defines the strength of its output signal(s). By adjusting the parameters, the neural network may be trained to make particular predictions.

The neural network may be pre-trained using supervised or unsupervised learning. Supervised learning may be implemented by providing training data including channel characteristic data and optimized channel states corresponding to that channel characteristic data (e.g. obtained through simulation). The neural network may then be trained based on the training data by updating the parameters to optimize the output of an objective function (e.g. to minimize an error in the predicted channel characteristics relative to the channel characteristics contained in the training data). Unsupervised learning may be implemented by training the neural network on channel characteristic data, and generating a reward function for the resultant channel states e.g. based on simulations or heuristics of signal quality for the connection. The neural network may then be trained based on the training data by updating the parameters of the neural network to increase the reward (e.g. increase the cumulative reward).

The problems to be addressed by the technical idea of the embodiments of the present disclosure are not limited to the above-mentioned problems, and other problems not mentioned will be clearly understood by those skilled in the art from the following description.

According to an aspect of the disclosure, an electronic device includes: a memory; a communication module comprising an antenna array configured to form a plurality of candidate beams; and a processor connected to the communication module and the memory, the processor comprising a channel state classifier based on a neural network, wherein the processor is configured to: generate channel characteristic data based on information measured from the plurality of candidate beams for a signal received from a base station, input the channel characteristic data to the channel state classifier to infer a channel state between the electronic device and the base station, and reform the plurality of candidate beams (i.e. perform beamforming to change properties of the candidate beams) based on the inferred channel state.

According to an aspect of the disclosure, a method of operating an electronic device includes: generating channel characteristic data based on information measured from a plurality of candidate beams for a signal received from a base station; applying the channel characteristic data to a neural network based on a deep-learning algorithm to infer a channel state between the electronic device and the base station; and reforming the plurality of candidate beams based on the inferred channel state.

According to an aspect of the disclosure, a method of operating an electronic device, includes forming a plurality of candidate beams for performing wireless communication with an external device; generating, based on information measured from the plurality of candidate beams, first channel characteristic data representing channel characteristics in a spatial domain and second channel characteristic data representing channel characteristics in a time domain; applying data obtained by combining the first channel characteristic data with the second channel characteristic data in a two-dimensional form to a pre-trained channel state inference model to infer a channel state between the electronic device and the external device; and reforming the plurality of candidate beams based on the channel state, wherein the first channel characteristic data comprises information on a reference signal received power (RSRP) measured from the plurality of candidate beams, wherein the second channel characteristic data includes information on one of a power delay profile (PDP) and a channel impulse response (CIR) measured from the plurality of candidate beams.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an example of a channel state in a wireless communication environment according to one or more embodiments;
FIG. 2 block diagram schematically illustrating an operation of an electronic device according to one or more embodiments;
FIG. 3 is a block diagram illustrating an electronic device according to one or more embodiments;
FIG. 4 is a flowchart illustrating a method of operating an electronic device, according to one or more embodiments;
FIG. 5A illustrates an example of a channel state inference operation of an electronic device according to one or more embodiments;
FIG. 5B illustrates an example of channel characteristic data according to one or more embodiments;
FIG. 5C illustrates an example of output data of a channel state classifier according to one or more embodiments;
FIG. 6A illustrates an example of a channel state inference operation of an electronic device according to one or more embodiments;
FIG. 6B illustrates an example of channel characteristic data according to one or more embodiments;
FIG. 7 is a flowchart illustrating a method of operating an electronic device according to one or more embodiments;
FIG. 8 is a flowchart illustrating a method of operating an electronic device according to one or more embodiments;
FIG. 9 is a flowchart illustrating a method of operating an electronic device according to one or more embodiments;
FIG. 10 is a flowchart illustrating a method of operating an electronic device according to one or more embodiments;
FIG. 11 is a flowchart illustrating a method of operating an electronic device according to one or more embodiments;
FIG. 12 is a flowchart illustrating a method of operating an electronic device according to one or more embodiments;
FIG. 13A is a diagram illustrating a beam policy corresponding to a channel state inferred by an electronic device according to one or more embodiments;
FIG. 13B illustrates an example of candidate beams reformed by an electronic device according to one or more embodiments;
FIG. 14A illustrates an example of a beam management operation based on a channel state of an electronic device according to one or more embodiments;
FIG. 14B illustrates an example of a beam training operation using candidate beams reformed for each channel state according to one or more embodiments;
FIG. 14C illustrates an example of a beam training operation using candidate beams reformed for each channel state according to one or more embodiments; and
FIG. 15 is a schematic block diagram of a wireless communication system according to one or more embodiments.

### DETAILED DESCRIPTION

Hereinafter, embodiments of the present disclosure will be described in detail with reference to the accompanying drawings.

For the sake of convenience, according to the embodiments of the present disclosure, some of the terms and names defined in the 3rd generation partnership project (3GPP) long term evolution (LTE) standard or the new radio (NR) standard are used. However, the embodiments of the present disclosure are not limited by the terms and names, and may be equally applied to systems according to other standards known to one of ordinary skill in the art.

A wireless communication system according to one or more embodiments may include a NR system, a 5th generation (5G) system, a long term evolution (LTE) system, a code division multiple access (CDMA) system, a global system for mobile communications (GSM) system, a wireless local area network (WLAN) system, or any other wireless communication system as a non-limiting example. Hereinafter, the wireless communication system is described on the premise that the wireless communication system is an NR system, an LTE system, or a system configured to support NR and LTE-based communication. However, the embodiments of the present disclosure are not limited thereto.

An electronic device (e.g., a terminal) according to one or more embodiments may be referred to as, for example, user equipment, a mobile station (MS), a mobile terminal (MT), a user terminal, a subscriber station (SS), a wireless device, or a handheld device.

The electronic device according to one or more embodiments may support 4G communication (e.g., LTE, LTE-advanced (A), or 5G communication (e.g., NR) defined in the 3GPP standard.

In one or more embodiments, for the 4G communication and the 5G communication, electronic devices may support a CDMA-based communication protocol, a wideband CDMA (WCDMA)-based communication protocol, a time division multiple access (TDMA)-based communication protocol, a frequency division multiple access (FDMA)-based communication protocol, an orthogonal frequency division multiplexing (OFDM)-based communication protocol, a cyclic prefix (CP)-OFDM-based communication protocol, a discrete Fourier transform-spread-OFDM)-based communication protocol, a non-orthogonal multiple access (NOMA)-based communication protocol, and a generalized frequency division multiplexing (GFDM)-based communication protocol.

In one or more embodiments, wireless communication may be performed based on one of the 5G communication capable of performing high-speed data transmission between an external device (e.g., a base station) and the electronic device (e.g., an FR1 band or an FR2 band of the 5G communication), the 4G communication (LTE or LTE-A), ultra wide band (UWB), and wireless fidelity (Wi-Fi).

The external device according to one or more embodiments may refer to a fixed station communicating with the electronic device and/or another base station. For example, the external device may be referred to as Node B, evolved-Node B (eNB), a sector, a site, a base transceiver system (BTS), an access point (AP), a relay node, a remote radio head (RRH), or a radio unit (RU). For example, in the wireless communication system, the external device as a minimum unit of a region for providing a communication service for each external device includes at least one cell. The external device may provide efficient multi-access communication for a plurality of terminals based on specific frequency resources allocated to each cell. For example, in the case of a multiple-input and multiple-output (MIMO) system, the electronic device and the external device may perform wireless communication based on a plurality of component carriers.

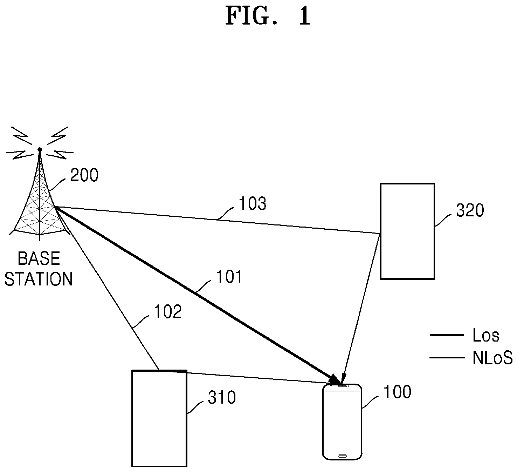

Herein, reference signal received power (RSRP) pattern data may refer to data including RSRP values of a plurality of candidate beams measured by an electronic device 100 (refer to FIG. 1) for a signal received from the external device.

Herein, a neural network may refer to a neural network pre-trained to receive the channel characteristic data (e.g., one of the RSRP pattern data; a combination of the RSRP pattern data, and the PDP data; and a combination of the RSRP pattern data, and the CIR data) measured from the plurality of candidate beams of the electronic device 100 to infer the channel state corresponding to the channel characteristic data through a deep-learning algorithm.

Herein, a sensor-aided beam management function may refer to a function of generating compensation information according to a change in position/orientation of the electronic device 100 and correcting an existing target beam based on the generated compensation information.

FIG. 1 illustrates an example of a wireless communication environment according to one or more embodiments.

Referring to FIG. 1, in the wireless communication environment according to one or more embodiments, an electronic device 100 may transmit and receive signals to and from a base station 200 through a channel of a first path 101 having line-of-sight (LoS) propagation characteristics. For example, a channel state of the first path 101 may include an LoS state. For example, a signal received through the channel of the first path 101 may be directly received by the electronic device 100 without being reflected by another object (e.g., a first object 310 or a second object 320) after being transmitted from the base station 200. A signal received through the channel of the first path 101 may be received by the electronic device 100 through one channel in which it is assumed that no physical phenomena such as diffraction, scattering, and reflection occur in the propagation path.

The electronic device 100 may transmit and receive signals to and from the base station 200 through channels of a second path 102 and a third path 103 having non-line-of-sight (NLoS) propagation characteristics. For example, the channel states of the second path 102 and the third path 103 may include NLoS states. For example, a signal received through the channels of the second path 102 and the third path 103 may be transmitted by the base station 200 and then reflected by the first object 310 and received by the electronic device 100 (e.g., the second path 102), or may be transmitted by the base station 200 and then reflected by the second object 320 and received by the electronic device 100 (e.g., the third path 103). The signal received through the channels of the second path 102 and the third path 103 may be received by the electronic device 100 through two or more channels as physical phenomena such as diffraction, scattering, and reflection occur in the propagation path.

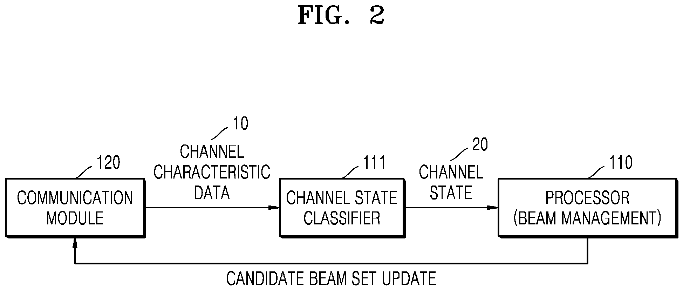

The electronic device and method according to one or more embodiments may infer a channel state (or a channel environment) in which a signal is received by using a pre-trained neural network, and may perform adaptive beam management based on the inferred channel state. Therefore, the device and method according to one or more embodiments may prevent excessive overhead in a beam training process by performing the adaptive beam management on the channel state and may improve communication quality by applying a beam policy corresponding to the channel state, as described below with reference to FIGS. 2 to 15.

FIG. 2 is a block diagram schematically illustrating an operation of an electronic device according to one or more embodiments.

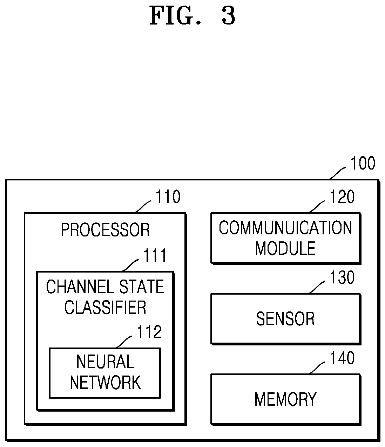

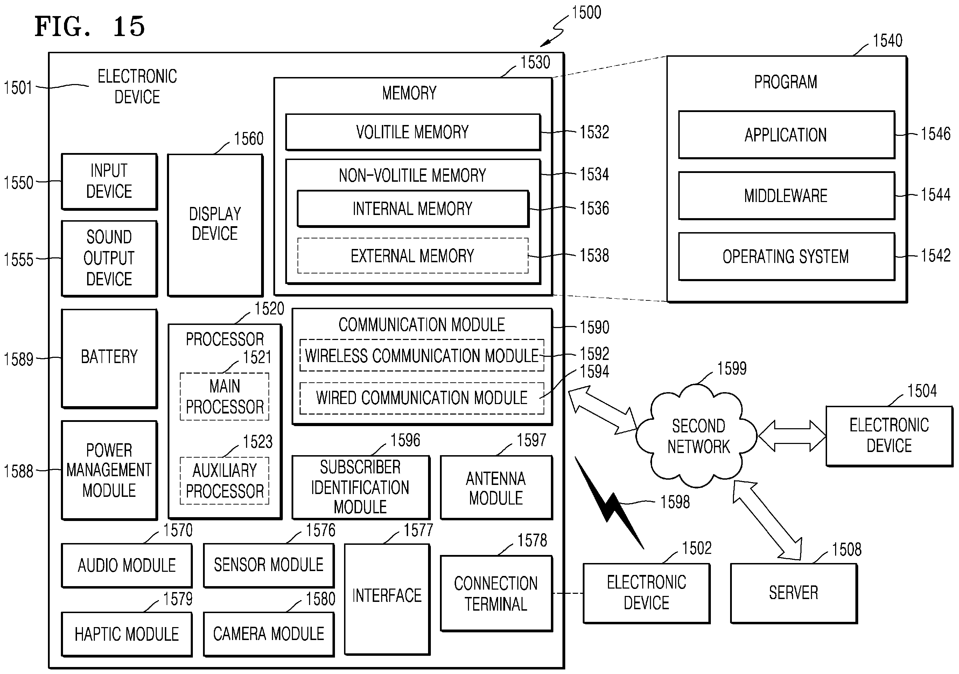

Referring to FIG. 2, the electronic device 100 may include a processor 110, a channel state classifier 111 including a neural network, and a communication module 120. Some components of the electronic device 100 are illustrated in FIG. 1. However, the embodiments of the present disclosure are not limited thereto and the electronic device 100 may further include other components (refer to FIGS. 3 and 15).

In FIG. 2, the communication module 120 of the electronic device 100 may form a predetermined number of candidate beams (hereinafter, referred to as a plurality of candidate beams) according to characteristics of the wireless communication system or a wireless communication situation. For example, the candidate beams of electronic device 100 may include all beams in a predefined beam codebook or some beams in the beam codebook based on the wireless communication system or the wireless communication situation. The plurality of candidate beams of the electronic device 100 may be arranged so as not to overlap to cover spatial areas in which a signal may be received from an external device based on a predetermined number of candidate beams.

The communication module 120 may generate channel characteristic data 10 including information measured from the plurality of candidate beams and may transmit the channel characteristic data 10 to the channel state classifier 111. In one or more examples, the channel characteristic data 10 may include information on at least one of RSRP, a power delay profile (PDP), and a channel impulse response (CIR) measured from the plurality of candidate beams for the signal received from the external device.

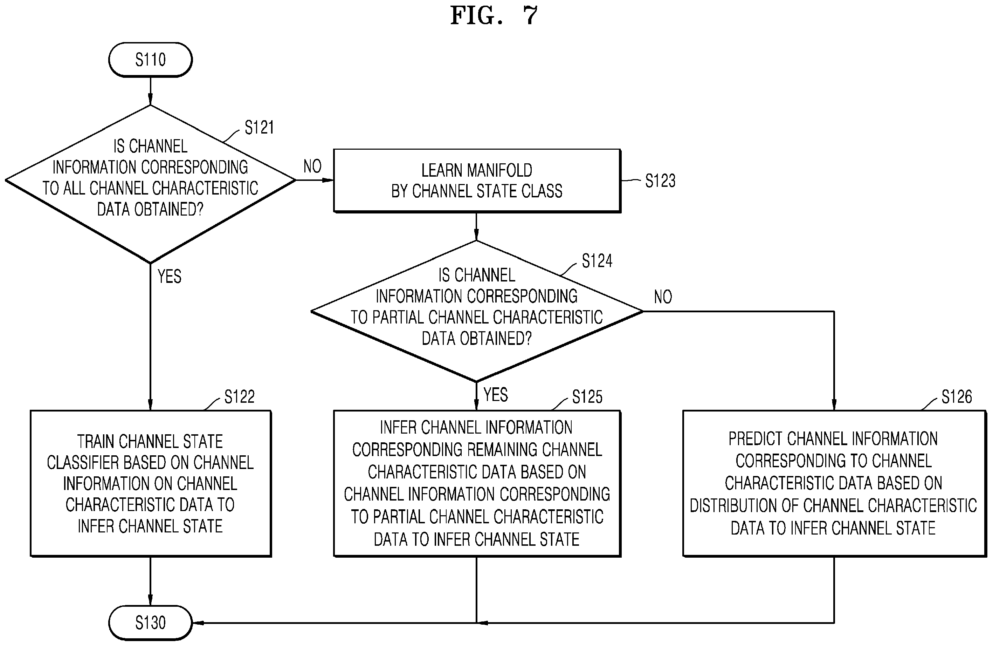

In one or more examples, the channel state classifier 111 may infer a channel state 20 by applying the channel characteristic data 10 received from the communication module 120 to the neural network. The neural network may be pre-trained to receive the channel characteristic data (e.g., RSRP pattern data, a combination of RSRP pattern data, and PDP data or a combination of RSRP pattern data, and CIR data) 10 and to infer the channel state 20 corresponding to the channel characteristic data 10 through a deep-learning algorithm. The channel state classifier 111 may select a method of inferring the channel state 20 based on whether channel information on the channel characteristic data 10 (e.g., a label value corresponding to the channel characteristic data 10) is obtained. A detailed description of an operation of the channel state classifier 111 selecting the inference method is described below with reference to FIG. 7 in accordance with one or more embodiments.

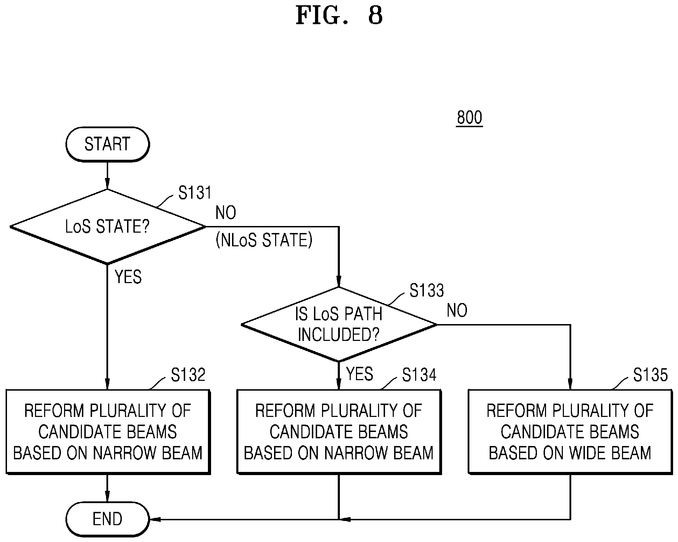

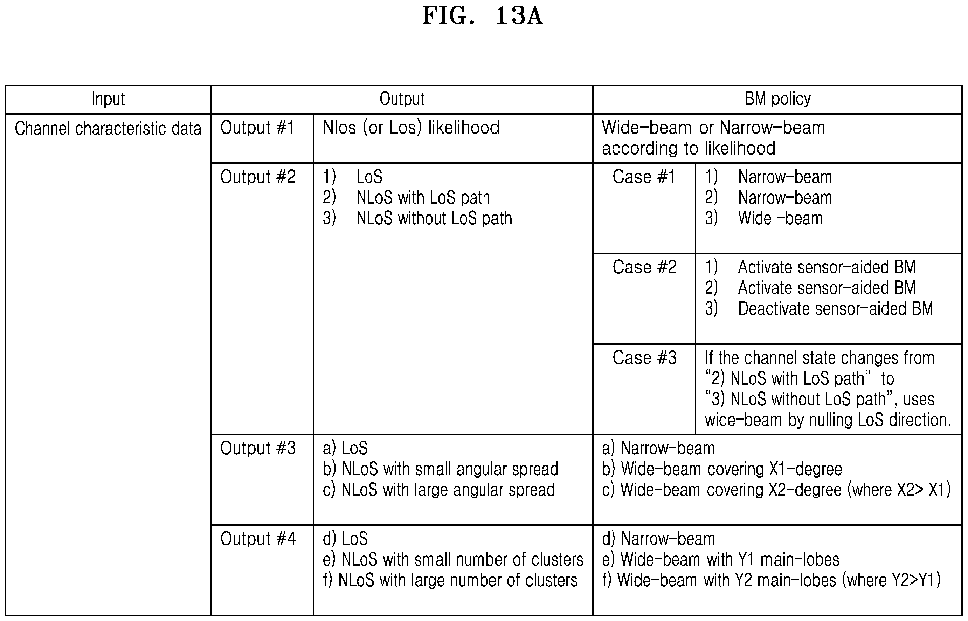

In one or more examples, the processor 110 may perform beam management for updating a candidate beam set (including the plurality of candidate beams) of the electronic device 100 based on the channel state 20 output from the channel state classifier 111. For example, the processor 110 may reform the plurality of candidate beams by controlling the communication module 120 based on the beam policy (refer to FIG. 13A) corresponding to the channel state 20 inferred by the channel state classifier 111, as described below with reference to FIGS. 8 to 13B.

The device and method according to various embodiments may provide an electronic device for minimizing beam training overhead and improving a beam performance gain through the adaptive beam management according to the channel state by inferring the channel state for the channel characteristic data measured from the plurality of candidate beams of the electronic device by using the neural network trained through the deep-learning algorithm.

FIG. 3 is a block diagram illustrating an electronic device 100 according to one or more embodiments.

Referring to FIG. 3, the electronic device 100 may include a processor 110, a communication module 120, a sensor 130, and memory 140, wherein the processor 110 includes a channel state classifier 111.

In one or more embodiments, the processor 110 may execute a program and/or a process stored in the memory 140 to perform a control operation of the electronic device 100. For example, a program executed to perform an operation of training a neural network 112 of the channel state classifier 111 according to one or more embodiments, an operation of inferring a channel state based on the trained neural network 112, and an operation of performing beam management (e.g., updating a beam policy for the plurality of candidate beams) based on the inferred channel state may be stored in the memory 140 as an instruction or program code executed by the processor 110. The processor 110 may access the memory 140 and execute the stored program code to control the electronic device 100 to infer the channel state corresponding to the channel characteristic data measured from the plurality of candidate beams of the communication module 120 through the neural network 112 and to perform the beam management (e.g., updating the beam policy for the plurality of candidate beams) based on the inferred channel state.

In one or more examples, the processor 110 may include the channel state classifier 111. The channel state classifier 111 may be implemented by a logic block implemented through logic synthesis, a software block performed by a processor, or a combination thereof. The channel state classifier 111 may include a procedure as a set of a plurality of instructions executed by the processor 110 and may be stored in memory accessible by the processor 110.

In one or more examples, the channel state classifier 111 may be pre-trained to apply the channel characteristic data measured from the plurality of candidate beams to the neural network 112 to infer the channel state corresponding to the channel characteristic data. The neural network 112 may be trained to infer the channel state through the deep-learning algorithm. The neural network 112 may have a multi-layer perceptron (MLP), a convolutional neural network (CNN), a recurrent neural network (RNN), or a transformer structure.

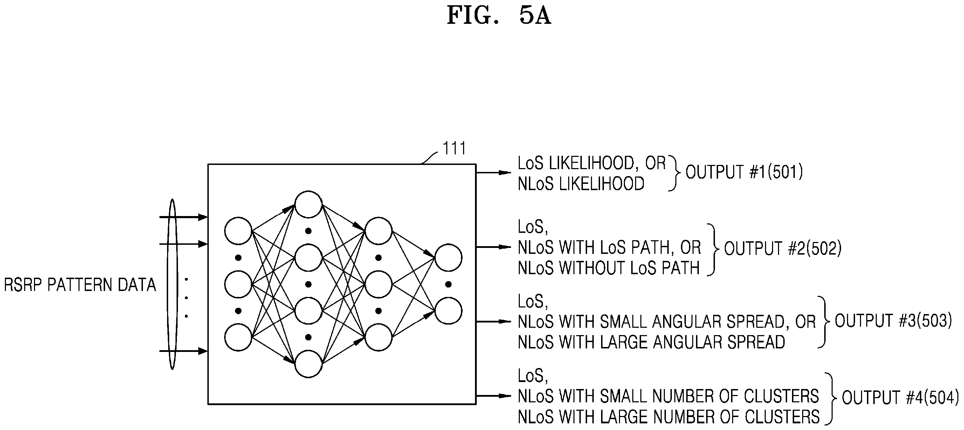

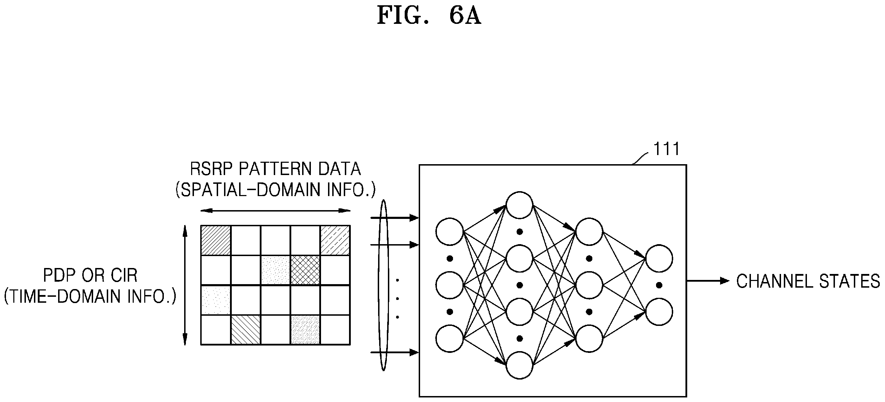

In one or more examples, the channel state classifier 111 may infer the channel state corresponding to the channel characteristic data measured from the plurality of candidate beams for the signal received from the external device by using the neural network 112. In one or more examples, the channel state as an output of the channel state classifier 111 may include channel states according to various communication environments/scenarios as well as the LoS/NLoS state (refer to the `Output' column of FIG. 13A) of which an example embodiment is described below with reference to FIGS. 5A and 6A.

In one or more examples, the processor 110 may perform optimal beam management corresponding to the channel state based on the channel state output from the channel state classifier 111. For example, the processor 110 may control the communication module 120 to update the candidate beam set of the electronic device 100 with the beam policy corresponding to the channel state. The processor 110 may reform the plurality of candidate beams included in the candidate beam set of the electronic device 100 based on the beam policy corresponding to the inferred channel state of which an example embodiment is described below with reference to FIGS. 7 to 12.

In one or more examples, the processor 110 may perform beam training by using the plurality of updated candidate beams, may select a target beam from the plurality of updated candidate beams based on the beam training result, and may perform wireless communication with the external device through the target beam.

When a position or orientation of the electronic device 100 is changed after the target beam is selected, the processor 110 may generate compensation information on the target beam based on sensing data (e.g., data on the amount of change in orientation of the electronic device 100) received from the sensor 130 and may correct the existing target beam based on the generated compensation information. The processor 110 may select the corrected target beam as the final target beam and may perform wireless communication with the external device. In the current specification, as described above, a function of generating the compensation information according to the change in position/orientation of the electronic device 100 to correct the existing target beam is defined as a sensor-aided beam management function.

In one or more examples, the communication module 120 includes at least one antenna array including a plurality of antennas and may form the plurality of candidate beams by using the plurality of antennas (or the antenna array). The communication module 120 may transmit a signal to the external device through the plurality of candidate beams, or may receive radio frequency (RF) signals from the external device. The communication module 120 may down-convert the RF signals received from the external device to generate intermediate frequency or baseband signals. The processor 110 may filter, decode, and/or digitize the intermediate frequency or baseband signals to generate data signals.

In one or more examples, the communication module 120 may receive the data signals from the processor 110. The communication module 120 may encode, multiplex, and/or analog-convert the received data signals. The communication module 120 may up-convert the intermediate frequency or baseband signals output from the processor 110 to transmit the intermediate frequency or baseband signals to the external device through the plurality of candidate beams as the RF signals.

In one or more examples, the sensor 130 may detect an operating state (such as a position, power, and a temperature) or an external environmental state (such as a user state) of the electronic device 100, and may generate an electrical signal and/or a data value corresponding to the detected state. The sensor 130 may generate data directly or indirectly indicating a change in position and/or orientation of the electronic device 100, e.g. the sensor may generate position, acceleration, or magnetic field data which may be used to directly determine the position and/or orientation of the electronic device, or in another example the sensor may generate grip, color, illuminance, or infra-red data which may be used to indirectly determine the position and/or orientation of the electronic device (e.g. a grip sensor indicating the device is being gripped may indicate that the position and/or orientation is a typical orientation of the device when gripped by the user, or an illuminance sensor detecting light may indicate that the orientation of the device is not such that the illuminance sensor is facing downwards). The sensor 130 may include a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor. For example, when the position or orientation of the electronic device 100 is changed, the sensor 130 may generate sensing data indicating position and/or orientation of the device, e.g. sensing data in which the amount of change in orientation of the electronic device 100 is sensed from reference axes (e.g., a horizontal axis x, a vertical axis y, and a height axis z) using the position of the electronic device 100 before being changed as a reference (e.g., an origin) and may transmit the sensing data to the processor 110.

In one or more examples, the memory 140 may include an operating system and may include device drivers, executable libraries, and/or an application and/or a process register including program code. The operating system and application may be implemented as software elements by executing code and/or instructions by a processor. For example, the memory 140 may store a program executed to perform an operation of training the neural network 112 according to embodiments, an operation of inferring the channel state corresponding to the channel characteristic data based on the trained neural network, and an operation of updating the beam policy to correspond to the inferred channel state in the form of an instruction or program code.

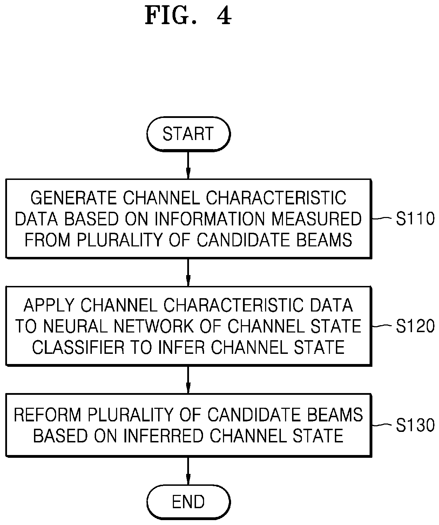

FIG. 4 is a flowchart illustrating a method of operating an electronic device, according to one or more embodiments.

Referring to FIG. 4, an adaptive beam management operation method according to the channel state of the electronic device 100 may include operations S110 to S130. The electronic device 100, the channel state classifier 111, and the neural network 112 of FIG. 4 respectively correspond to the electronic device 100, the channel state classifier 111, and the neural network 112 of FIGS. 1 to 3.

In operation S110, the electronic device 100 may generate the channel characteristic data based on information measured from the plurality of candidate beams. The channel characteristic data may include information on at least one of the RSRP, the PDP, and the CIR measured from the plurality of candidate beams.

In operation S120, the electronic device 100 may infer the channel state by applying the channel characteristic data to the neural network 112 of the channel state classifier 111. The electronic device 100 may identify whether channel information on the channel characteristic data is obtained and may select a method (hereinafter, referred to as the inference method) of the channel state classifier 111 inferring the channel state based on the identification result. In one or more examples, the channel information may indicate a channel state class with the label value corresponding to the channel characteristic data, as described below with reference to FIG. 7. The electronic device 100 may infer the channel state corresponding to the channel characteristic data according to the selected inference method by using the neural network 112 of the channel state classifier 111. The electronic device 100 not only classifies (e.g., binary classification) an LoS state or an NLoS state but also classifies channel states of various communication scenarios (e.g., multi-class classification) through the channel state classifier 111. For example, the channel states in the various communication scenarios may include an NLoS state including an LoS path (e.g. where the candidate beams currently use an NLoS path but a LoS path would be possible), an NLoS state that does not include an LoS path, an NLoS state in which an angle of arrival (AoA) range of a signal received by the electronic device 100 is less than a first threshold, an NLoS state in which the AoA range of the signal received by the electronic device 100 is greater than or equal to the first threshold, an NLoS state in which a number of clusters is less than a second threshold, or an NLoS state in which the number of clusters is greater than or equal to the second threshold. The channel state according to one or more embodiments is not limited to the above-described example, and may further include channel states according to channel scenarios in other wireless communication environments.

In operation S130, the electronic device 100 may reform the plurality of candidate beams based on the inferred channel state. The electronic device 100 may reform the plurality of candidate beams based on the optimal beam policy corresponding to the inferred channel state. A description of the optimal beam policy corresponding to each channel state is described below with reference to FIGS. 8 to 12. For example, when the channel state is inferred by the channel state classifier 111 to be an NLoS state including an LoS path, the electronic device 100 may reform the plurality of candidate beams based on a narrow beam according to an optimal beam policy corresponding to the NLoS state including the LoS path, and when the channel state is inferred by the channel state classifier to be an NLoS state not including an LoS path, the electronic device 100 may reform the plurality of candidate beams based on a wide beam having a greater beam width than the beam width of the narrow beam.

FIG. 5A illustrates an example of a channel state inference operation of an electronic device according to one or more embodiments.

Referring to FIG. 5A, the electronic device 100 (refer to FIG. 2) may input the RSRP pattern data to the channel state classifier 111 (refer to FIG. 2) (or the neural network 112 (refer to FIG. 2) of the channel state classifier 111 (refer to FIG. 2) to infer the channel state corresponding to the channel characteristic data. In one or more examples, the RSRP pattern data may refer to channel characteristic data including RSRP values measured from the plurality of candidate beams of the electronic device 100 for the signal received from the external device.

In one or more examples, the processor 110 of the electronic device 100 may perform beam training based on all candidate beams or some candidate beams in a predefined beam codebook by controlling the communication module 120 (refer to FIG. 2) to generate the RSRP pattern data. The processor 110 may input the generated RSRP pattern data to the channel state classifier 111.

In response to input of the RSRP pattern data, the channel state classifier 111 may output a channel state (or likelihood by channel state class) corresponding to the RSRP pattern data through the neural network 112 of the pre-trained deep-learning algorithm. For example, when first RSRP pattern data is input to the channel state classifier 111, the neural network 112 may infer the likelihood by channel state class (e.g., Output #1 501). In one or more examples, the likelihood by channel state class may include soft-decision information representing a probability that the channel state corresponding to the channel characteristic data includes an NLoS state (or an LoS state). For example, the channel state classifier 111 may output LoS likelihood for the channel state corresponding to the channel characteristic data (e.g., the RSRP pattern data) to infer the channel state based on the LoS likelihood. For example, the channel state classifier 111 may output NLoS likelihood for the channel state corresponding to the channel characteristic data (e.g., the RSRP pattern data) to infer the channel state based on the NLoS likelihood. In one or more embodiments, the neural network 112 may infer the LoS likelihood instead of the NLoS likelihood.

In one or more examples, the channel state classifier 111 may determine whether the channel information (e.g., the label value corresponding to the channel characteristic data) is obtained from the channel characteristic data and may select the method of inferring the channel state based on the determination result. A detailed description of an operation of the channel state classifier 111 selecting the channel state inference method is described below with reference to FIG. 7.

The channel state classifier 111 may perform multi-class classifications (e.g., Output #2 (502), Output #3 (503), and Output #4 (504)) for the channel states of the various communication scenarios as well as a binary classification for an LoS state/NLoS state. In one or more examples, the output form of the channel state classifier 111 may include a hard decision form that determines and outputs one class among multi-classes, or a soft decision form that outputs a probability for each multi-class. For example, when second RSRP pattern data is input to the channel state classifier 111, the neural network 112 may infer one of the channel state classes belonging to Output #2 (502) as a channel state corresponding to the second RSRP pattern data. In one or more examples, the channel state classes belonging to Output #2 (502) may include an LoS state, an NLoS state including an LoS path, and an NLoS state that does not include an LoS path. For example, when third RSRP pattern data is input to the channel state classifier 111, the neural network 112 may infer one of the channel state classes belonging to Output #3 (503) as a channel state corresponding to the third RSRP pattern data. In one or more examples, the channel state classes belonging to Output #3 (503) may include an LoS state, an NLoS state having a small angular spread, and an NLoS state having a large angular spread. The NLoS state having the small angular spread may refer to the NLoS state in which the AoA range of the signal received by the electronic device 100 is less than the first threshold and the NLoS state having the large angular spread may refer to the NLoS state in which the AoA range of the signal received by the electronic device 100 is greater than or equal to the first threshold. For example, when fourth RSRP pattern data is input to the channel state classifier 111, the neural network 112 may infer one of the channel state classes belonging to Output #4 (504) as a channel state corresponding to the fourth RSRP pattern data. In one or more examples, the channel state classes belonging to Output #4 (504) may include an LoS state, an NLoS state determined to have a small number of clusters, and an NLoS state determined to have a large number of clusters. The NLoS state determined to have the small number of clusters may refer to the NLoS state in which the number of inferred clusters is less than the second threshold, and the NLoS state determined to have the large number of clusters may refer to the NLoS state in which the number of inferred clusters is less than the second threshold. The cluster may refer to an object that affects a direction of the signal received by the electronic device 100.

In FIG. 5A, the channel state classifier 111 is illustrated as inferring one of the channel state classes belonging to Output #1 (501) to Output #4 (504) as a channel state. However, the embodiments of the present disclosure are not limited thereto. The channel state classifier 111 may select at least one output among Output #1 (501) to Output #4 (504) according to settings and may infer one of the channel state classes belonging to the selected at least one output as a channel state. For example, when Output #2 (502) is selected according to the settings, the channel state classifier 111 may infer one of the classes belonging to Output #2 (502) (e.g., the LoS state, the NLoS state including the LoS path, and the NLoS state that does not include the LoS path) as the channel state corresponding to the channel characteristic data. For example, when Output #2 (502) and Output #3 (503) are selected according to the settings, the channel state classifier 111 may infer one of the classes belonging to Output #2 (502) and Output #3 (503) (e.g., the LoS state, the NLoS state including the LoS path, the NLoS state that does not include the LoS path, the NLoS state having the small angular spread, and the NLoS state having the large angular spread) as the channel state corresponding to the channel characteristic data.

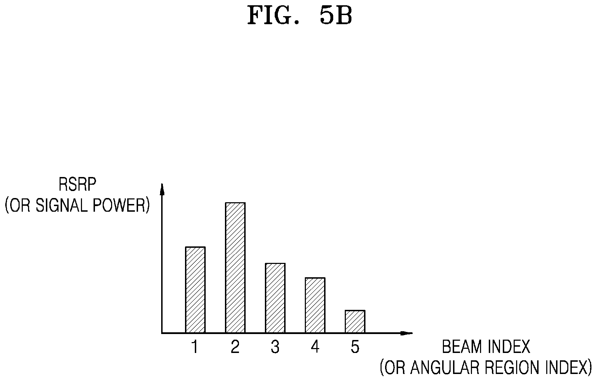

FIG. 5B illustrates an example of channel characteristic data according to one or more embodiments.

FIG. 5B illustrates RSRP data (or RSRP pattern data) in channel characteristic data.

In the graph of FIG. 5B, it is assumed that the horizontal axis represents a beam index (or an angular region index) for the candidate beams of the electronic device 100, and the vertical axis represents the RSRP (or signal power) measured from the plurality of candidate beams.

Referring to FIG. 5B, the RSRP data (or the RSRP pattern data) may represent presence or absence of a channel path in a region of interest in a spatial domain and, when a channel path exists in the region of interest, power of the signal received through the channel path. For example, the RSRP data (or the RSRP pattern data) may represent channel characteristics in the spatial domain. Therefore, the channel state classifier 111 may receive the RSRP data (or the RSRP pattern data) and may infer a channel state corresponding to the RSRP data (or the RSRP pattern data) based on the neural network 112.

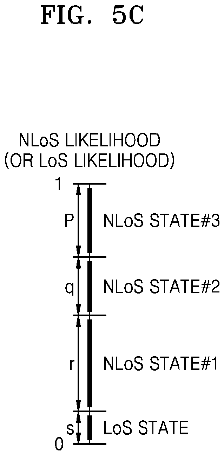

FIG. 5C illustrates an example of output data of a channel state classifier 111 according to one or more embodiments.

FIG. 5C illustrates a likelihood by channel class output by the channel state classifier 111. As described above with reference to FIG. 5A, in response to the input of the first RSRP pattern data, the channel state classifier 111 may output the NLoS likelihood (or the LoS likelihood) based on the first RSRP pattern data and may infer a channel state corresponding to the input first RSRP pattern data based on the output NLoS likelihood (or the LoS likelihood). Hereinafter, in FIG. 5C, for convenience sake, it is assumed that the channel state classifier 111 infers the channel state based on the NLoS likelihood.

Referring to FIG. 5C, in the NLoS likelihood, it may be noted that a range corresponding to a probability that the channel state corresponding to the first RSRP pattern data includes an LoS state is 's', a range corresponding to a probability that the channel state corresponding to the first RSRP pattern data includes a first NLoS state (e.g., NLoS state#1) is 'r', a range corresponding to a probability that the channel state corresponding to the first RSRP pattern data includes a second NLoS state (e.g., NLoS state#2) is 'q', and a range corresponding to a probability that the channel state corresponding to the first RSRP pattern data includes a third NLoS state (e.g., NLoS state#3) is 'p' (p+q+r+s=1). The channel state classifier 111 may infer the first NLoS state (e.g., NLoS state #1) having the widest range 'r' among p, q, r, and s as the channel state corresponding to the first RSRP pattern data.

In FIG. 5C, the channel state classifier 111 is described as inferring a channel state based on the NLoS likelihood. However, the embodiments of the present disclosure are not limited thereto, and the channel state classifier 111 according to one or more embodiments may infer a channel state based on the LoS likelihood.

Although likelihood by class for four channel states is illustrated in FIG. 5C for convenience sake, the embodiments of the present disclosure are not limited thereto, and the channel state classifier 111 according to one or more embodiments may infer a channel state based on likelihood by channel class for a larger number of channel states.

FIG. 6A illustrates an example of a channel state inference operation of an electronic device 100 according to one or more embodiments.

Referring to FIG. 6A, the processor 110 (refer to FIG. 2) of the electronic device 100 may control the communication module 120 (refer to FIG. 2) to perform beam training based on all candidate beams or a partial set of candidate beams in a predefined beam codebook and to measure the RSRP including the channel characteristic information in the spatial domain, and the PDP (or the CIR) including the channel characteristic information in the time domain (at this time, the RSRP and the PDP (or the CIR) may be measured from the same candidate beam and the PDP (or the CIR) may not be measured from some candidate beams). The processor 110 may generate two-dimensional channel characteristic data based on the measured information. For example, the processor 110 may generate the two-dimensional channel characteristic data by combining the RSRP pattern data with the PDP data or the RSRP pattern data and the CIR data measured from the plurality of candidate beams. The processor 110 may input the two-dimensional channel characteristic data to the channel state classifier 111 including the neural network 112.

In one or more examples, in response to the input of the two-dimensional channel characteristic data, the channel state classifier 111 may output a channel state corresponding to the two-dimensional channel characteristic data by using the neural network 112 of the pre-trained deep-learning algorithm. For example, when the two-dimensional channel characteristic data is input to the channel state classifier 111, the neural network 112 may infer the channel state corresponding to the two-dimensional channel characteristic data.

In one or more examples, the channel state classifier 111 may determine whether the channel information (e.g., the label value corresponding to the channel characteristic data) is obtained from the channel characteristic data and may select the method of inferring the channel state based on the determination result. A detailed description of an operation of the channel state classifier 111 selecting the inference method is described below with reference to FIG. 7.

In one or more examples, the channel state classifier 111 may perform multi-class classifications for the channel states of the various communication scenarios as well as a binary classification for an LoS state/NLoS state. In one or more examples, the output form of the channel state classifier 111 may include a hard decision form that determines and outputs one class among multi-classes, or a soft decision form that outputs a probability for each multi-class. In one or more examples, the multi-classes for the channel state may include the channel state classes for the LoS state, the NLoS state including the LoS path, the NLoS state that does not include the LoS path, the NLoS state having the small angular spread, the NLoS state having the large angular spread, the NLoS state having the small number of clusters, and the NLoS state having the large number of clusters. The NLoS state having the small angular spread may refer to the NLoS state in which the AoA range of the signal received by the electronic device 100 is less than the first threshold and the NLoS state having the large angular spread may refer to the NLoS state in which the AoA range of the signal received by the electronic device 100 is greater than or equal to the first threshold . The NLoS state determined to have the small number of clusters may refer to the NLoS state in which the number of inferred clusters is less than the second threshold, and the NLoS state determined to have the large number of clusters may refer to the NLoS state in which the number of inferred clusters is greater than or equal to the second threshold. The cluster may refer to an object that affects a direction of the signal received by the electronic device 100.

The channel state classifier 111 according to one or more embodiments may infer the channel states (or the multi-classes for the channel state) in various other communication scenarios/communication environments as well as the above-described channel states (or the multi-classes for the channel state).

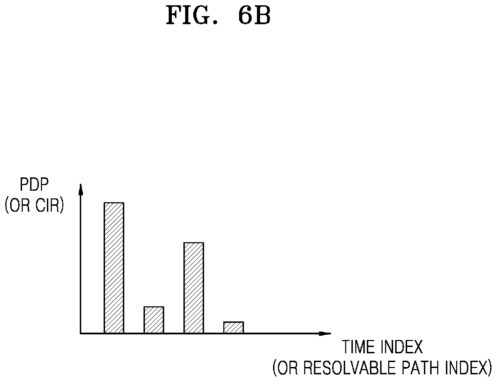

In FIG. 6B, the channel characteristic data is illustrated as two-dimensional data. However, the embodiments of the present disclosure are not limited thereto, and the channel characteristic data (e.g., the RSRP pattern data and the PDP data (or the RSRP pattern data and the CIR data) according to one or more embodiments may be arranged in a one-dimensional form and may be input to the channel state classifier 111 (or the neural network 112). The channel characteristic data (e.g., the RSRP pattern data and the PDP data (or the RSRP pattern data and the CIR data) according to one or more embodiments may be input to the channel state classifier 111 (or the neural network 112) in a multi-dimensional form.

FIG. 6B illustrates an example of channel characteristic data according to one or more embodiments.

FIG. 6B illustrates PDP data (or CIR data) in channel characteristic data.

In the graph of FIG. 6B, it is assumed that the horizontal axis represents a time index (or a resolvable path index), and the vertical axis represents the PDP data (or the CIR data) measured from the plurality of candidate beams of the electronic device 100.

Referring to FIG. 6B, the PDP data (or the CIR data) may represent the number of channel paths in the region of interest in the time domain, and, when a channel path exists in the region of interest, power of a signal received through the channel path or a gain of the signal (e.g., a complex gain of the signal). That is, the PDP data (or the CIR data) may represent channel characteristics in a time domain. Therefore, the channel state classifier 111 may receive the PDP data (or the CIR data) and may infer a channel state corresponding to the PDP data (or the CIR data) through the neural network 112.

FIG. 7 is a flowchart illustrating a method of operating an electronic device 100, according to one or more embodiments.

FIG. 7 is a diagram illustrating an operation of the electronic device 100 selecting a method of inferring a channel state after generating the channel characteristic data in operation S110 of FIG. 4.

Referring to FIG. 7, the operation of the electronic device 100 selecting the method of inferring the channel state may include operations S121 to S126. The electronic device 100, the channel state classifier 111, and the neural network 112 of FIG. 7, respectively, may correspond to the electronic device 100, the channel state classifier 111, and the neural network 112 of FIGS. 1 to 6B.

In operation S121, the electronic device 100 may determine whether channel information on all channel characteristic data is obtained. In one or more examples, the channel information may refer to a label value corresponding to the channel characteristic data (e.g., a channel state class corresponding to the channel characteristic data). For example, the inference method (or an inference target) of the channel state classifier 111 (or the neural network 112) inferring the channel state class may be selected depending on whether the channel information (or the label value) corresponding to the channel characteristic data may be obtained. When the channel information on all the channel characteristic data is obtained, the electronic device 100 performs operation S122. If the electronic device 100 determines that channel information on all channel characteristic data is not obtained, the electronic device 100 may perform operation S123.

In operation S122, the electronic device 100 may infer the channel state by training the channel state classifier 111 based on the channel information on the channel characteristic data. For example, the channel state classifier 111 of the electronic device 100 may perform binary classification on a new channel based on a trained content and classify the new channel into an LoS state/NLoS state. In one or more examples, the channel state classifier 111 may perform multi-class classification to classify the channel states in the various scenarios (e.g., the NLoS state including the LoS path and the NLoS state that does not include the LoS path). The channel state classifier 111 may infer a channel state based on the classification result performed by the neural network 112.

In operation S123, the electronic device 100 may perform manifold learning by channel state class. In one or more examples, manifold learning may refer to a work of measuring the distance between data items (e.g., the channel characteristic data) re-expressed in an arbitrary space (e.g., a manifold) to determine characteristics between data items (e.g., similarity between data items). For example, the neural network 112 may re-express the channel characteristic data as spatial coordinates in an arbitrary space (e.g., a manifold) and may determine channel characteristics between the channel characteristic data based on the distance between the spatial coordinates. For example, the electronic device 100 may learn a manifold for the LoS state/NLoS state, or may learn a manifold for the channel states in the various scenarios.

In operation S124, the electronic device 100 may determine whether the channel information is obtained from partial channel characteristic data. In one or more examples, the channel information may refer to the label value corresponding to the channel characteristic data (e.g., the channel state class corresponding to the channel characteristic data). When the channel information on the partial channel characteristic data is obtained, the electronic device 100 performs operation S125. If the electronic device 100 determines that the channel information is not obtained from the partial channel characteristic data, the electronic device 100 may perform operation S126.

In operation S125, the electronic device 100 may infer the channel state by inferring channel information on remaining channel characteristic data based on the channel information on the partial channel characteristic data. The channel state classifier 111 may infer the channel information (e.g., the label value) corresponding to the remaining channel characteristic data based on channel characteristic data in which channel information exists among the channel characteristic data re-expressed in the arbitrary space through the neural network 112. For example, the channel state classifier 111 may infer the channel information on the remaining channel characteristic data based on channel information on an LoS state/NLoS state (binary classification) of the partial channel characteristic data. For example, the channel state classifier 111 may infer the channel information on the remaining channel characteristic data based on channel information on the channel states (multi-class classification) in the various scenarios of the partial channel characteristic data. The channel state classifier 111 may infer the channel state corresponding to the channel characteristic data based on the channel information (including the inferred channel information).

In operation S126, the electronic device 100 may infer the channel state by predicting the channel information of the channel characteristic data based on a distribution of the channel characteristic data. The channel state classifier 111 may predict the channel information of the channel characteristic data based on a distribution of the channel characteristic data (e.g., RSRP and PDP (or CIR)) re-expressed in the arbitrary space through the neural network 112. The channel state classifier 111 may infer the channel state corresponding to the channel characteristic data based on the predicted channel information. For example, the channel state classifier 111 may infer the channel state by predicting the channel information on the LoS state/NLoS state (binary classification) based on the distribution of the channel characteristic data re-expressed in the arbitrary space. For example, the channel state classifier 111 may infer the channel state by predicting the channel information on the channel states (multi-class classification) in the various scenarios based on the distribution of the channel characteristic data re-expressed in the arbitrary space.

In operation S130, the electronic device 100 may reform the plurality of candidate beams based on the inferred channel state, examples of which are described below with reference to Figures 8 through 11.

FIG. 8 is a flowchart illustrating a method of operating an electronic device 100, according to one or more embodiments.

FIG. 8 is a diagram illustrating an example 800 of the operation S130 of FIG. 4.

Referring to FIG. 8, the operation S130 of the electronic device 100 reforming a plurality of channel state based beams may include operations S131 to S135. The electronic device 100, the channel state classifier 111, and the neural network 112 of FIG. 8 respectively correspond to the electronic device 100, the channel state classifier 111, and the neural network 112 of FIGS. 1 to 7.

In operation S131, the electronic device 100 may determine whether the inferred channel state includes an LoS state. When the inferred channel state includes the LoS state, the electronic device 100 may perform operation S132, and when the inferred channel state does not include the LoS state (e.g.,, when the inferred channel state includes an NLoS state), the electronic device 100 may perform operation S133.

In operation S132, the electronic device 100 may reform the plurality of candidate beams based on the narrow beam. For example, the electronic device 100 may configure the candidate beam set (including the plurality of candidate beams) to include the narrow beam according to a beam policy corresponding to the LoS state. For example, the electronic device 100 may reform at least one of the plurality of candidate beams into the narrow beam.

In operation S133, the electronic device 100 may determine whether the inferred channel state includes the LoS path (the NLoS state). When the inferred channel state includes the NLoS state including the LoS path, the electronic device 100 may perform operation S134, and if not (i.e., when the inferred channel state includes the NLoS state that does not include the LoS path), the electronic device 100 may perform operation S135.

In operation S134, the electronic device 100 may reform the plurality of candidate beams based on the narrow beam. For example, the electronic device 100 may configure the candidate beam set (including the plurality of candidate beams) to include the narrow beam according to the beam policy corresponding to the NLoS state including the LoS path. For examples, the electronic device 100 may reform at least one of the plurality of candidate beams into the narrow beam.

In operation S135, the electronic device 100 may reform the plurality of candidate beams based on a wide beam. For example, the electronic device 100 may configure the candidate beam set (including the plurality of candidate beams) to include the wide beam according to a beam policy corresponding to the NLoS state that does not include the LoS path. For example, the electronic device 100 may reform at least one of the plurality of candidate beams into the wide beam.

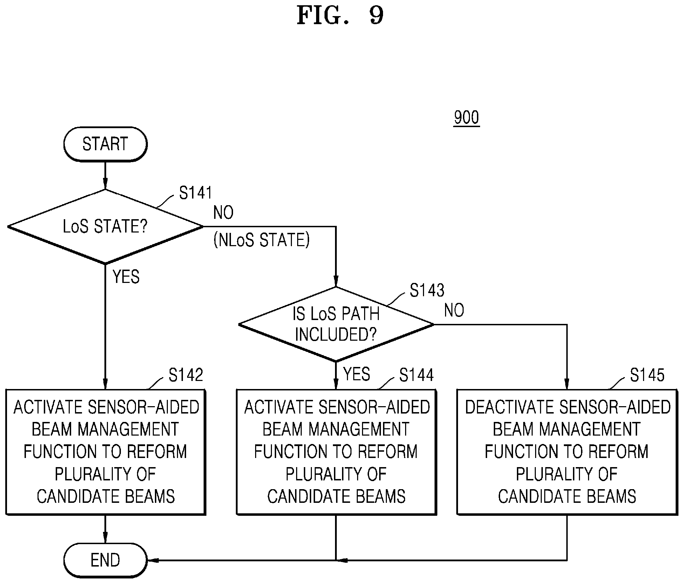

FIG. 9 is a flowchart illustrating a method of operating an electronic device 100, according to one or more embodiments.

FIG. 9 is a diagram illustrating an example 900 of the operation S130 of FIG. 4.

Referring to FIG. 9, the operation S130 of the electronic device 100 reforming a plurality of channel state based beams may include operations S141 to S145. The electronic device 100, the channel state classifier 111, and the neural network 112 of FIG. 9 respectively correspond to the electronic device 100, the channel state classifier 111, and the neural network 112 of FIGS. 1 to 8.

In operation S141, the electronic device 100 may determine whether the inferred channel state includes an LoS state. When the inferred channel state includes the LoS state, the electronic device 100 may perform operation S142, and when the inferred channel state does not include the LoS state (i.e., when the inferred channel state includes an NLoS state), the electronic device 100 may perform operation S143.

In operation S142, the electronic device 100 may reform the plurality of candidate beams by activating the sensor-aided beam management function. For example, the electronic device 100 may reform the plurality of candidate beams by activating the sensor-aided beam management function according to the beam policy corresponding to the LoS state. In one or more examples, the sensor-aided beam management function may refer to a function of correcting the existing target beam by generating compensation information according to the change in position/orientation of the electronic device 100. The existing target beam may refer to a beam selected from the plurality of candidate beams based on the previous beam training result. For example, when the position or orientation of the electronic device 100 is changed, the electronic device 100 (or the processor 110 (refer to FIG. 2) may generate the compensation information on the existing target beam based on the sensing data (e.g., the data on the amount of change in orientation of the electronic device 100) received from the sensor 130 (refer to FIG. 2) and may correct the existing target beam based on the generated compensation information. The electronic device 100 may select the corrected target beam as the final target beam and may perform wireless communication with the external device.

In operation S143, the electronic device 100 may determine whether the inferred channel state includes the LoS path (the NLoS state). When the inferred channel state includes the NLoS state including the LoS path, the electronic device 100 may perform operation S144, and if not (i.e., when the inferred channel state includes the NLoS state that does not include the LoS path), the electronic device 100 may perform operation S145.

In operation S144, the electronic device 100 may reform the plurality of candidate beams by activating the sensor-aided beam management function. For example, the electronic device 100 may reform the plurality of candidate beams by activating the sensor-aided beam management function according to the beam policy corresponding to the NLoS state including the LoS path. In one or more examples, the sensor-aided beam management function may refer to a function of correcting the existing target beam by generating compensation information according to the change in position/orientation of the electronic device 100. The existing target beam may refer to a beam selected from the plurality of candidate beams based on the previous beam training result.

In operation S145, the electronic device 100 may reform the plurality of candidate beams by deactivating the sensor-aided beam management function, and reforming the plurality of candidate beams without the use of the sensor-aided beam management function. Deactivating may comprise disabling the sensor-aided beam management function if it is currently enabled, or maintaining the disabled status of the sensor-aided beam management function disabled if it is already disabled. For example, the electronic device 100 may reform the plurality of candidate beams by deactivating the sensor-aided beam management function according to the beam policy corresponding to the NLoS state that does not include the LoS path.

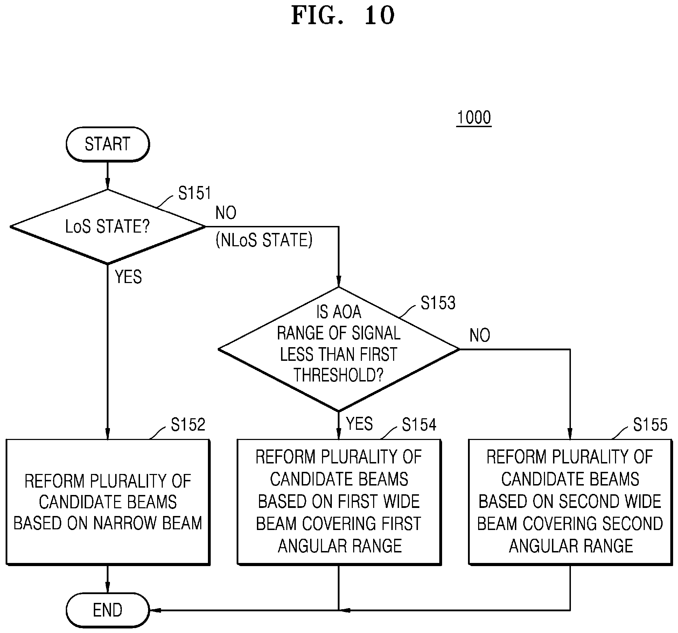

FIG. 10 is a flowchart illustrating a method of operating an electronic device 100, according to one or more embodiments.

FIG. 10 is a diagram illustrating an example 1000 of the operation S130 of FIG. 4.

Referring to FIG. 10, the operation S130 of the electronic device 100 reforming a plurality of channel state based beams may include operations S151 to S155. The electronic device 100, the channel state classifier 111, and the neural network 112 of FIG. 10 respectively correspond to the electronic device 100, the channel state classifier 111, and the neural network 112 of FIGS. 1 to 9.

In operation S151, the electronic device 100 may determine whether the inferred channel state includes an LoS state. When the inferred channel state includes the LoS state, the electronic device 100 may perform operation S152, and when the inferred channel state does not include the LoS state (i.e., when the inferred channel state includes an NLoS state), the electronic device 100 may perform operation S153.

In operation S152, the electronic device 100 may reform the plurality of candidate beams based on the narrow beam. For example, the electronic device 100 may configure the candidate beam set (including the plurality of candidate beams) to include the narrow beam according to a beam policy corresponding to the LoS state. For example, the electronic device 100 may reform at least one of the plurality of candidate beams into the narrow beam.

In operation S153, the electronic device 100 may determine whether the AoA range of the signal received from the external device is less than the first threshold (the NLoS state). The NLoS state in which the AoA range of the signal is less than the first threshold corresponds to the NLoS state having the small angular spread, and the NLoS state in which the AoA range of the signal is the first threshold or more corresponds to the NLoS state having the large angular spread. In the NLoS state in which the AoA range of the received signal is less than the first threshold, the electronic device 100 may perform operation S154 and, in the NLoS state in which the AoA range of the received signal is the first threshold or more, the electronic device 100 may perform operation S155.

In operation S154, the electronic device 100 may reform the plurality of candidate beams based on a first wide beam covering a first angular range. For example, the electronic device 100 may configure the candidate beam set (including the plurality of candidate beams) to include the first wide beam covering the first angular range according to the beam policy corresponding to the inferred state (e.g., the NLoS state in which the AoA range of the signal is less than the first threshold). For example, the electronic device 100 may reform at least one of the plurality of candidate beams into the first wide beam covering the first angular range.

In operation S155, the electronic device 100 may reform the plurality of candidate beams based on a second wide beam covering a second angular range. For example, the electronic device 100 may configure the candidate beam set (including the plurality of candidate beams) to include the second wide beam covering the second angular range according to the beam policy corresponding to the inferred state (i.e., the NLoS state in which the AoA range of the signal is the first threshold or more). For example, the electronic device 100 may reform at least one of the plurality of candidate beams into the second wide beam covering the second angular range. In one or more examples, the second angular range may be greater than the first angular range.

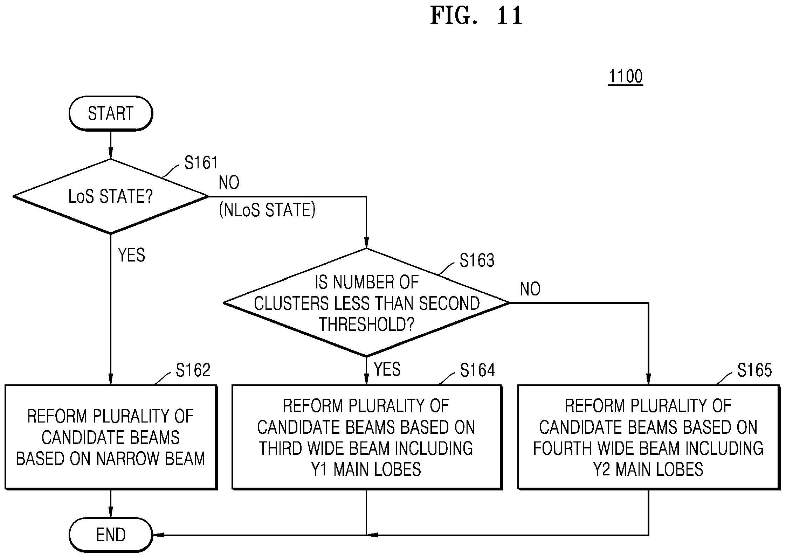

FIG. 11 is a flowchart illustrating a method of operating an electronic device 100, according to one or more embodiments.

FIG. 11 is a diagram illustrating an example 1100 of the operation S130 of FIG. 4.

Referring to FIG. 11, the operation S130 of the electronic device 100 reforming a plurality of channel state based beams may include operations S161 to S165. The electronic device 100, the channel state classifier 111, and the neural network 112 of FIG. 11 respectively correspond to the electronic device 100, the channel state classifier 111, and the neural network 112 of FIGS. 1 to 10.

In operation S161, the electronic device 100 may determine whether the inferred channel state includes an LoS state. When the inferred channel state includes the LoS state, the electronic device 100 may perform operation S162, and when the inferred channel state does not include the LoS state (i.e., when the inferred channel state includes an NLoS state), the electronic device 100 may perform operation S163.

In operation S162, the electronic device 100 may reform the plurality of candidate beams based on the narrow beam. For example, the electronic device 100 may configure the candidate beam set (including the plurality of candidate beams) to include the narrow beam according to a beam policy corresponding to the LoS state. For example, the electronic device 100 may reform at least one of the plurality of candidate beams into the narrow beam.

In operation S163, the electronic device 100 may determine whether the number of clusters is less than the second threshold (the NLoS state) in the direction of the signal. The NLoS state in which the number of clusters is less than the second threshold in the direction of the signal corresponds to the NLoS state determined to have the small number of clusters, and the NLoS state in which the number of clusters is the second threshold or more in the direction of the signal corresponds to the NLoS state determined to have the large number of clusters. In the NLoS state in which the number of clusters is less than the second threshold in the direction of the signal, the electronic device 100 may perform operation S164 and, in the NLoS state in which the number of clusters is the second threshold or more in the direction of the signal, the electronic device 100 may perform operation S165.

In operation S164, the electronic device 100 may reform the plurality of candidate beams based on a third wide beam including Y1 main lobes, where Y1 is an integer. For example, the electronic device 100 may configure the candidate beam set (including the plurality of candidate beams) to include the third wide beam including the Y1 main lobes according to a beam policy corresponding to the inferred state (i.e., the NLoS state in which the number of clusters is less than the second threshold in the direction of signal). For example, the electronic device 100 may reform at least one of the plurality of candidate beams into the third wide beam including the Y1 main lobes.

In operation S165, the electronic device 100 may reform the plurality of candidate beams based on a fourth wide beam including Y2 main lobes, where Y2 is a positive integer. For example, the electronic device 100 may configure the candidate beam set (including the plurality of candidate beams) to include the fourth wide beam including the Y2 main lobes according to a beam policy corresponding to the inferred state (i.e., the NLoS state in which the number of clusters is the second threshold or more in the direction of signal). For example, the electronic device 100 may reform at least one of the plurality of candidate beams into the fourth wide beam including the Y2 main lobes, where Y2 is a positive integer and Y2 may be greater than Y1.

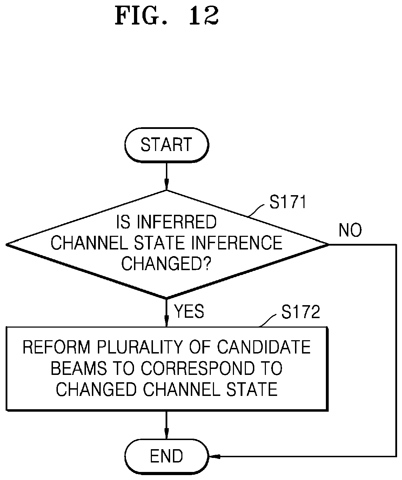

FIG. 12 is a flowchart illustrating a method of operating an electronic device 100, according to one or more embodiments.

FIG. 12 is a diagram illustrating an example 1200 of an operation of reforming a plurality of beams as the channel state of the electronic device 100 is changed after the operation S130 of FIG. 4.

Referring to FIG. 12, the operation of reforming the plurality of beams as the channel state of the electronic device 100 is changed may include operations S171 and S172. The electronic device 100, the channel state classifier 111, and the neural network 112 of FIG. 12 respectively correspond to the electronic device 100, the channel state classifier 111, and the neural network 112 of FIGS. 1 to 11.

In operation S171, the electronic device 100 may determine whether channel state inference by the channel state classifier 111 is changed. When the channel state inference by the channel state classifier 111 is changed, the electronic device 100 may perform operation S172.

In operation S172, the electronic device 100 may reform the plurality of candidate beams to correspond to the changed channel state. For example, when the channel state inferred by the channel state classifier 111 is changed from the `NLoS state including the LoS path' to the `NLoS state that does not include the LoS path', the electronic device 100 may reform the plurality of candidate beams based on the wide beam (nulling the LoS path) according to the beam policy corresponding to the NLoS state that does not include the LoS path.

FIG. 13A is a diagram illustrating a beam policy corresponding to a channel state inferred by an electronic device 100 according to one or more embodiments.

The table of FIG. 13A illustrates, according to one or more embodiments, an input of the channel state classifier 111 (e.g., channel characteristic data), the output of the channel state classifier 111 (e.g., a channel state), and a beam policy corresponding to the output of the channel state classifier 111. An input/output of the neural network 112 may correspond to the input/output of the channel state classifier 111.

Referring to FIG. 13A, the input of the channel state classifier 111 includes the channel characteristic data, and the channel characteristic data may include one of RSRP pattern data, a combination of RSRP pattern data and PDP data, and a combination of RSRP pattern data and CIR data measured from the plurality of candidate beams. In one or more examples, a combination of RSRP pattern data and PDP data, or a combination of RSRP pattern data and CIR data may be input to the channel state classifier 111 in a one-dimensional form or a two-dimensional form.

The output of the channel state classifier 111 is 'the channel state corresponding to the channel characteristic data' inferred by the channel state classifier 111. The channel state classifier 111 may infer and output at least one of the channel classes belonging to Output #1 to Output #4 as the channel state corresponding to the channel characteristic data.

The processor 110 (refer to FIG. 2) may reform the plurality of candidate beams according to a beam policy corresponding to the output (e.g., an inferred channel state) of the channel state classifier 111.

In one or more embodiments, in the case of Output #1, the channel state classifier 111 may output the NLoS (or LoS) likelihood (refer to FIG. 5C) based on the received channel characteristic data and may finally output the channel state inferred based on the output NLoS (or LoS) likelihood. The processor 110 may reform the plurality of candidate beams into the wide beam or the narrow beam according to the finally output channel state (e.g., the NLoS (or LoS) likelihood).

In one or more embodiments, in the case of Output #2, the channel state classifier 111 may infer/output one of the classes belonging to Output #2 (e.g., the LoS state, the NLoS state including the LoS path, and the NLoS state that does not include the LoS path) as the channel state based on the received channel characteristic data.

In one or more embodiments, when the output of the channel state classifier 111 includes the LoS state, the processor 110 may reform the plurality of candidate beams into the narrow beam according to the beam policy corresponding to the channel state (refer to Case #1 of FIG. 13A and FIG. 8). When the output of the channel state classifier 111 includes the NLoS state including the LoS path, the processor 110 may reform the plurality of candidate beams based on the narrow beam according to the beam policy corresponding to the channel state. When the output of the channel state classifier 111 includes the NLoS state that does not include the LoS path, the processor 110 may reform the plurality of candidate beams based on the wide beam according to the beam policy corresponding to the channel state.

In one or more embodiments, when the output of the channel state classifier 111 includes the LoS state, the processor 110 may activate the sensor-aided beam management function according to the beam policy corresponding to the channel state to reform the plurality of candidate beams (refer to Case #2 of FIG. 13A and FIG. 9). When the output of the channel state classifier 111 includes the NLoS state including the LoS path, the processor 110 may activate the sensor-aided beam management function according to the beam policy corresponding to the channel state to reform the plurality of candidate beams. When the output of the channel state classifier 111 includes the NLoS state that does not include the LoS path, the processor 110 may deactivate the sensor-aided beam management function according to the beam policy corresponding to the channel state to reform the plurality of candidate beams.

In an example, when the output of the channel state classifier 111 is changed from 'the NLoS state including the LoS path' to 'the NLoS state that does not include the LoS path', the processor 110 may reform the plurality of candidate beams into the wide beam (i.e., nulling of the LoS path) according to the beam policy corresponding to the changed channel state (refer to Case #3 of FIG. 13A and FIG. 12).

In one or more embodiments, in the case of Output #3, the channel state classifier 111 may infer/output one of the classes belonging to Output #3 (e.g., the LoS state, the NLoS state having the small angular spread, and the NLoS state having the large angular spread) as the channel state based on the received channel characteristic data. The NLoS state having the small angular spread may refer to the NLoS state in which the AoA range of the signal received by the electronic device 100 is less than the first threshold and the NLoS state having the large angular spread may refer to the NLoS state in which the AoA range of the signal received by the electronic device 100 is the first threshold or more. When the output of the channel state classifier 111 includes the LoS state, the processor 110 may reform the plurality of candidate beams based on the narrow beam according to the beam policy corresponding to the channel state (refer to FIG. 10). When the output of the channel state classifier 111 includes the NLoS state having the small angular spread (i.e., the NLoS state in which the AoA range of the received signal is less than the first threshold), the processor 110 may reform the plurality of candidate beams based on the wide beam covering an angular range, X1, according to the beam policy corresponding to the channel state. When the output of the channel state classifier 111 includes the NLoS state having the large angular spread (i.e., the NLoS state in which the AoA range of the received signal is the first threshold or more), the processor 110 may reform the plurality of candidate beams based on the wide beam covering an angular range, X2 (X2>X1), according to the beam policy corresponding to the channel state.

In one or more embodiments, in the case of Output #4, the channel state classifier 111 may infer/output one of the classes belonging to Output #3 (e.g., the LoS state, the NLoS state having the small number of clusters, and the NLoS state having the large number of clusters) as the channel state based on the received channel characteristic data. The NLoS state determined to have the small number of clusters may refer to the NLoS state in which the number of clusters is less than the second threshold, and the NLoS state determined to have the large number of clusters may refer to the NLoS state in which the number of clusters is less than the second threshold. The cluster may refer to an object that affects a direction of the signal received by the electronic device 100. When the output of the channel state classifier 111 includes the LoS state, the processor 110 may reform the plurality of candidate beams based on the narrow beam according to the beam policy corresponding to the channel state (refer to FIG. 11). When the output of the channel state classifier 111 includes the NLoS state determined to have the small number of clusters (e.g., the NLoS state in which the number of clusters is less than the second threshold), the processor 110 may reform the plurality of candidate beams based on the wide beam including the Y1 main lobes according to the beam policy corresponding to the channel state. When the output of the channel state classifier 111 includes the NLoS state determined to have the large number of clusters (e.g., the NLoS state in which the number of clusters is the second threshold or more), the processor 110 may reform the plurality of candidate beams based on the wide beam including the Y2 (Y2>Y1) main lobes according to the beam policy corresponding to the channel state.

The device and method according to the embodiment may reduce beam training overhead by performing the adaptive beam management (e.g., reforming the plurality of candidate beams) according to the inferred channel state and may improve communication performance of the device by applying the beam policy corresponding to the channel state.

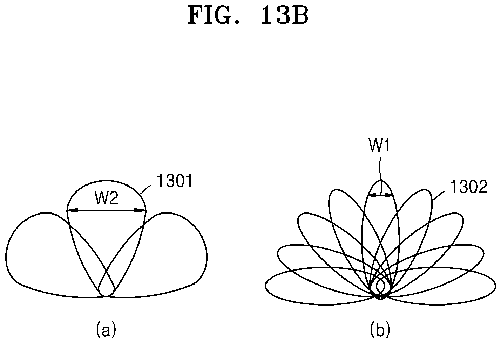

FIG. 13B illustrates an example of candidate beams reformed by an electronic device 100 according to one or more embodiments.

FIG. 13B illustrates a wide beam 1301 and a narrow beam 1302 as an example of candidate beams reformulated according to the beam policy of FIG. 13A.

Referring to FIG. 13B, in the case of (a), the processor 110 (refer to FIG. 2) may reform the plurality of candidate beams based on the wide beam 1301 according to the beam policy corresponding to the inferred channel state (e.g., the NLoS state that does not include the LoS path). In the case of (b), the processor 110 may reform the plurality of candidate beams based on the narrow beam 1302 according to the beam policy corresponding to the inferred channel state (e.g., the NLoS state including the LoS path). As illustrated in FIG. 13B, in one or more examples, the narrow beam 1302 may include a first beam width W1, and the wide beam 1301 may include a second beam width W2, where W2 >W1.

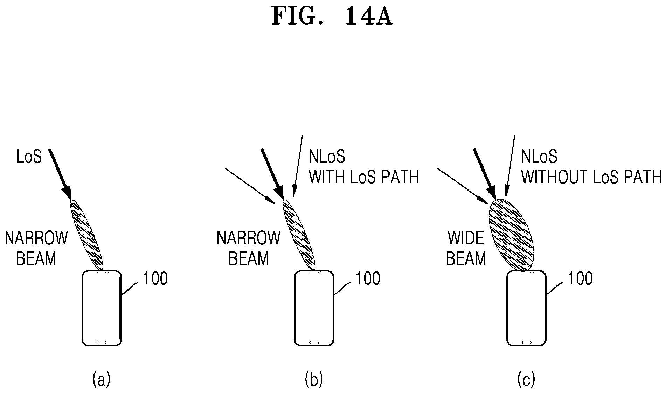

FIG. 14A illustrates an example of a beam management operation based on a channel state of an electronic device 100 according to one or more embodiments.

Referring to FIG. 14A, in the case of (a), the electronic device 100 may apply the channel characteristic data measured from the plurality of candidate beams to the channel state classifier 111 for the signal received from the external device to infer the channel state in which the signal is received as 'the LoS state'. The electronic device 100 may control the communication module 120 (refer to FIG. 2) to reform the plurality of candidate beams based on the narrow beam according to the beam policy corresponding to 'the LoS state'.

In the case of (b), the electronic device 100 may apply the channel characteristic data measured from the plurality of candidate beams to the channel state classifier 111 for the signal received from the external device to infer the channel state in which the signal is received as 'the NLoS state including the LoS path'. The electronic device 100 may control the communication module 120 (refer to FIG. 2) to reform the plurality of candidate beams based on the narrow beam according to the beam policy corresponding to 'the NLoS state including the LoS path'.

In the case of (b), the electronic device 100 may apply the channel characteristic data measured from the plurality of candidate beams to the channel state classifier 111 for the signal received from the external device to infer the channel state in which the signal is received as 'the NLoS state that does not include the LoS path'. The electronic device 100 may control the communication module 120 (refer to FIG. 2) to reform the plurality of candidate beams based on the wide beam according to the beam policy corresponding to 'the NLoS state that does not include the LoS path'.

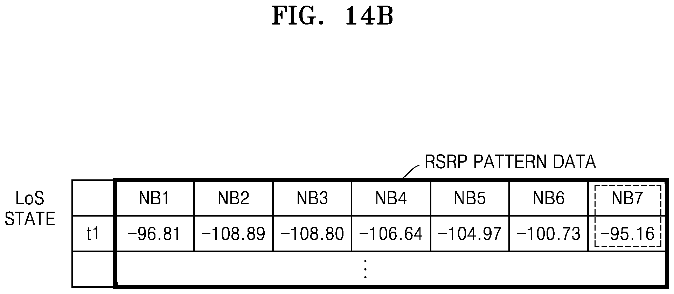

FIG. 14B illustrates an example of a beam training operation using candidate beams reformed for each channel state according to one or more embodiments.

Specifically, FIG. 14B is a diagram for explaining a beam training operation for the plurality of candidate beams reformed in the case of (a) of FIG. 14A.

Referring to FIG. 14B, the electronic device 100 may reform the plurality of candidate beams based on the narrow beam according to the beam policy corresponding to the inferred channel state (e.g., the LoS state). For example, the electronic device 100 may reform first to seventh candidate beams NB1 to NB7 into the narrow beam. The electronic device 100 may perform beam training based on the plurality of reformed candidate beams. For example, the electronic device 100 may generate the RSRP pattern data by measuring RSRP from each of the plurality of reformed candidate beams (e.g., the first to seventh candidate beams NB1 to NB7). The electronic device 100 may select the seventh candidate beam NB7 having `-95.16', which is the highest value in the RSRP pattern data, as a target beam. The electronic device 100 may perform wireless communication with the external device by using the seventh candidate beam NB7.

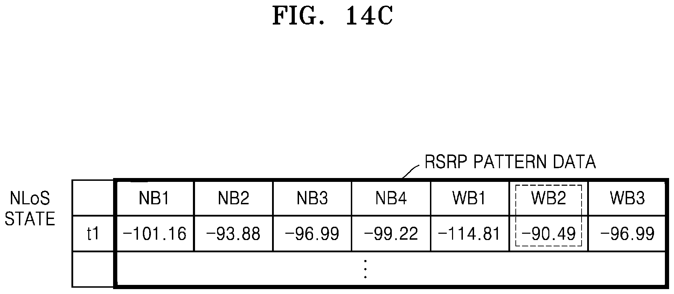

FIG. 14C illustrates an example of a beam training operation using candidate beams reformed for each channel state according to one or more embodiments.

Specifically, FIG. 14C is a diagram for explaining a beam training operation for the plurality of candidate beams reformed in the case of (c) of FIG. 14A.

Referring to FIG. 14C, the electronic device 100 may reform the plurality of candidate beams into the wide beam based on the wide beam according to the beam policy corresponding to the inferred channel state (e.g., the NLoS state including the LoS path). For example, the electronic device 100 may reform first to fourth candidate beams NB1 to NB4 among the plurality of candidate beams into the narrow beam, and fifth to seventh candidate beams WB1 to WB3 into the wide beam. The electronic device 100 may perform beam training based on the plurality of reformed candidate beams. For example, the electronic device 100 may generate the RSRP pattern data by measuring RSRP from each of the plurality of reformed candidate beams (e.g., the first to seventh candidate beams NB 1 to WB3). The electronic device 100 may select the sixth candidate beam WB2 having `-90.49', which is the highest value in the RSRP pattern data, as a target beam. The electronic device 100 may perform wireless communication with the external device by using the sixth candidate beam WB2.

FIG. 15 is a schematic block diagram of a wireless communication system 1500 according to one or more embodiments.

An electronic device 1501 of FIG. 15 may correspond to the electronic device 100 of FIGS. 1 to 14, a processor 1520 of FIG. 15 may correspond to the processor 110 of FIGS. 1 to 14, memory 1530 of FIG. 15 may correspond to the memory 140 of FIG. 2, a sensor module 1576 of FIG. 15 may correspond to the sensor 130 of FIG. 2, and a communication module 1590 of FIG. 15 may correspond to the communication module 120 of FIG. 2.

Referring to FIG. 15, in the wireless communication system 1500, the electronic device 1501 may communicate with another electronic device 1502 through a first network 1598 (such as a short-range wireless communication network), or may communicate with another electronic device 1504 and/or a server 1508 through a second network 1599 (such as a long-range wireless communication network). The electronic device 1501 may communicate with the electronic device 1504 through the server 1508. The electronic device 1501 may include the processor 1520, the memory 1530, an input device 1550, a sound output device 1555, a display device 1560, an audio module 1570, the sensor module 1576, an interface 1577, a haptic module 1579, a camera module 1580, a power management module 1588, a battery 1589, the communication module 1590, a subscriber identification module 1596, and/or an antenna module 1597. In the electronic device 1501, some (such as the display device 1560) of the components may be omitted or other components may be added. Some of the components may be implemented as one integrated circuit. For example, the sensor module 1576 (such as a fingerprint sensor, an iris sensor, or an illuminance sensor) may be embedded in the display device 1560 (such as a display).

The processor 1520 may execute software (such as a program 1540) to control one or a plurality of other components (such as hardware and software components) of the electronic device 1501 connected to the processor 1520, and may perform various data processing or operations. As a part of data processing or operation, the processor 1520 may load instructions and/or data received from other components (such as the sensor module 1576 and the communication module 1590) into volatile memory 1532, may process the instructions and/or data stored in the volatile memory 1532, and may store the result data in non-volatile memory 1534. The processor 1520 may include a main processor 1521 (such as a central processing unit (CPU) or an application processor (AP)) and an auxiliary processor 1523 (such as a graphics processing unit (GPU), an image signal processor, a sensor hub processor, or a communication processor) that may operate independently or together with the main processor 1521. The auxiliary processor 1523 may use less power than the main processor 1521, and may perform a specialized function.

The auxiliary processor 1523 may control functions and/or states related to some of the components of the electronic device 1501 (such as the display device 1560, the sensor module 1576, and the communication module 1590) on behalf of the main processor 1521 while the main processor 1521 is in an inactive state (such as a sleep state) or together with the main processor 1521 while the main processor 1521 is in an active state (such as an application execution state). The auxiliary processor 1523 (such as the image signal processor or the communication processor) may be implemented as a part of other functionally related components (such as the camera module 1580 and the communication module 1590).

In one or more embodiments, the processor 1520 may apply the channel characteristic data (e.g., the RSRP pattern data and the PDP data (or the CIR data)) measured from the plurality of candidate beams of the electronic device 1501 to the channel state classifier 111 (or the neural network 112) for the signal received from the external device to infer the channel state corresponding to the channel characteristic data.

In one or more embodiments, the processor 1520 may perform various beam managements based on the inferred channel state. For example, the processor 1520 may reform the plurality of candidate beams according to the beam policy corresponding to the inferred channel state. The processor 1520 may select a target beam by performing beam training on the plurality of reformed candidate beams. The processor 1520 may perform wireless communication with the external device by using the selected target beam.

The processor 1520 may reform the plurality of candidate beams by activating the sensor-aided beam management function according to the beam policy corresponding to the channel state. For example, when the position/orientation of the electronic device 1501 is changed after the existing target beam is selected, the processor 1520 may activate/deactivate the sensor-aided beam management function according to the inferred channel state to correct the existing target beam based on the sensing data of the sensor module 1576 (e.g., the amount of change in orientation of the electronic device 1501), and may select the corrected beam as the final target beam to perform wireless communication with the external device.

The memory 1530 may store various data items required by the components of the electronic device 1501 (such as the processor 1520 and the sensor module 1576). The data may include, for example, input data and/or output data for software (such as the program 1540) and instructions related thereto. The memory 1530 may include the volatile memory 1532 and/or the non-volatile memory 1534. The non-volatile memory 1532 may include internal memory 1536 fixedly mounted in the electronic device 1501 and removable external memory 1538.

The program 1540 may be stored as software in the memory 1530, and may include an operating system 1542, middleware 1544, and/or an application 1546.

The input device 1550 may receive instructions and/or data to be used for the components of the electronic device 1501 (such as the processor 1520) from the outside of the electronic device 1501 (such as a user). The input device 1550 may include a microphone, a mouse, a keyboard, and/or a digital pen (such as a stylus pen).

The sound output device 1555 may output a sound signal to the outside of the electronic device 1501. The sound output device 1555 may include a speaker and/or a receiver. The speaker may be used for general purposes such as multimedia playback or recording playback, and the receiver may be used to receive incoming calls. The receiver may be integrated as a part of the speaker or implemented as a separate, independent device.

The display device 1560 may visually provide information to the outside of the electronic device 1501. The display device 1560 may include a display, a hologram device, or a projector and a control circuit for controlling the device. The display device 1560 may include a touch circuitry configured to detect a touch, and/or a sensor circuit configured to measure intensity of force generated by the touch (such as a pressure sensor).

The audio module 1570 may convert sound into an electrical signal or, conversely, may convert an electrical signal into sound. The audio module 1570 may obtain sound through the input device 1550, or may output sound through a speaker and/or headphone of another electronic device (such as the electronic device 1502) directly or wirelessly connected to the sound output device 1555, and/or the electronic device 1501.

The sensor module 1576 may detect an operating state (such as power and a temperature) of the electronic device 1501 or an external environmental state (such as a user state), and may generate an electrical signal and/or data value corresponding to the detected state. The sensor module 1576 may include a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor. For example, the sensor module 1576 may sense the change in position or orientation of the electronic device 1501.

The interface 1577 may support one or a plurality of designated protocols that may be used to directly or wirelessly connect the electronic device 1501 to another electronic device (such as the electronic device 1502). The interface 1577 may include a high definition multimedia interface (HDMI), a universal serial bus (USB) interface, a secure digital (SD) card interface, and/or an audio interface.

The connection terminal 1578 may include a connector through which the electronic device 1501 may be physically connected to another electronic device (such as the electronic device 1502). The connection terminal 1578 may include an HDMI connector, a USB connector, an SD card connector, and/or an audio connector (such as a headphone connector).

The haptic module 1579 may convert an electrical signal into a mechanical stimulation (such as vibration and movement) or an electrical stimulation that a user may perceive through a tactile or kinesthetic sense. The haptic module 1579 may include a motor, a piezoelectric element, and/or an electrical stimulation device.

The camera module 1580 may capture a still image and a moving image. The camera module 1580 may include an image acquisition device, additional lens assembly image signal processors, and/or flashes. The lens assembly included in the camera module 1580 may collect light emitted from a subject that is a target of image capture.

The power management module 1588 may manage power supplied to the electronic device 1501. The power management module 1588 may be implemented as a part of a power management integrated circuit (PMIC).

The battery 1589 may supply power to the components of the electronic device 1501. The battery 1589 may include a non-rechargeable primary cell, a rechargeable secondary cell, and/or a fuel cell.

The communication module 1590 may support establishment of a direct (wired) communication channel and/or a wireless communication channel between the electronic device 1501 and another electronic device (the electronic device 1502, the electronic device 1504, or the server 1508), and communication through the established communication channel. The communication module 1590 may include one or a plurality of communication processors that operate independently of the processor 1520 (such as the AP) and support direct communication and/or wireless communication. The communication module 1590 may include a wireless communication module 1592 (such as a cellular communication module, a short-range wireless communication module, or a global navigation satellite system (GNSS) communication module) and/or a wired communication module 1594 (such as a local area network (LAN) communication module or a power line communication module). Among these communication modules, the corresponding communication module may communicate with other electronic devices through the first network 1598 (the short-range communication network such as Bluetooth, WiFi Direct, or infrared data association (IrDA)) or the second network 1599 (the long-range communication network such as a cellular network, the Internet, or a computer network (such as the LAN or a wide area network (WAN)). These various types of communication modules may be integrated into one component (such as a single chip) or may be implemented as a plurality of separate components (such as a plurality of chips). The wireless communication module 1592 may verify and authenticate the electronic device 1501 in a communication network such as the first network 1598 and/or the second network 1599 by using subscriber information (such as an international mobile subscriber identifier (IMSI)) stored in the subscriber identification module 1596. For example, the communication module 1590 may perform wireless communication with the external device based on the target beam selected based on the AoA distribution estimated through the neural network of the processor 1520.

The antenna module 1597 may transmit or receive signals and/or power to or from the outside (such as other electronic devices). The antenna may include a radiator including a conductive pattern formed on a substrate (such as a printed circuit board (PCB)). The antenna module 1597 may include one or a plurality of antennas. When the plurality of antennas are included, an antenna suitable for a communication method used in the communication network such as the first network 1598 and/or the second network 1599 may be selected from the plurality of antennas by the communication module 1590. Signals and/or power may be transmitted or received between the communication module 1590 and other electronic devices through the selected antenna. In addition to the antenna, other components (such as a radio frequency integrated circuit (RFIC)) may be included as a part of the antenna module 1597.

Some of the components are connected to one another and may exchange signals (such as instructions and data) through communication methods between peripheral devices (such as a bus, a general purpose input and output (GPIO), a serial peripheral interface (SPI), and a mobile industry processor interface (MIPI)).

The instructions or data may be transmitted or received between the electronic device 1501 and the external electronic device 1504 through the server 1508 connected to the second network 1599. The other electronic devices 1502 and 1504 may be the same or different type of devices as or from the electronic device 1501. All or some of the operations executed by the electronic device 1501 may be executed by one or a plurality of electronic devices among the other electronic devices 1502, 1504, and 1508. For example, when the electronic device 1501 needs to perform a certain function or service, instead of executing the function or service, the electronic device 1501 may ask the one or plurality of electronic devices to perform a part or all of the function or service. The one or plurality of electronic devices receiving the request may execute an additional function or service related to the request, and may transmit the result of execution to the electronic device 1501. For this purpose, cloud computing, distributed computing, and/or client-server computing technologies may be used.

While the embodiments of the present disclosure have been particularly shown and described with reference to embodiments thereof, it will be understood that various changes in form and details may be made therein without departing from the scope of the following claims.

## Claims

1. An electronic device comprising:
memory;
a communication module comprising an antenna array configured to form a plurality of candidate beams; and
a processor operatively connected to the communication module and the memory, the processor comprising a channel state classifier based on a neural network,
wherein the processor is configured to:
generate channel characteristic data based on information measured from the plurality of candidate beams for a signal received from a base station,
input the channel characteristic data to the channel state classifier to infer a channel state between the electronic device and the base station, and
reform the plurality of candidate beams based on the inferred channel state.

2. The electronic device of claim 1, wherein the channel characteristic data comprises information on at least one of a reference signal received power, a power delay profile, and a channel impulse response.

3. The electronic device of claim 1 or 2, wherein the processor is further configured to:
determine whether channel information is obtained from the channel characteristic data, and
select a method of the channel state classifier inferring the channel state based on a result the determination of whether the channel information is obtained from the channel characteristic data .

4. The electronic device of claim 3, wherein the processor is further configured to:
based on determining that the channel information corresponding to all channel characteristic data among the channel characteristic data is obtained from the channel characteristic data, select a method of classifying a channel class based on the channel information;
based on determining that the channel information corresponding to all channel characteristic data among the channel characteristic data is not obtained from the channel characteristic data, select a method of predicting channel information corresponding to the channel characteristic data based on a distribution of the channel characteristic data; and
based on determining that the channel information corresponding to partial channel characteristic data among the channel characteristic data is obtained from the channel characteristic data, select a method of inferring channel information corresponding to remaining channel characteristic data based on channel information corresponding to the partial channel characteristic data.

5. The electronic device of any preceding claim, wherein the processor is further configured to:
infer the channel state as one of a line-of-sight, LoS, state and a non-line-of-sight, NLoS, state,
based on inferring the channel state as the LoS state, reform the plurality of candidate beams based on a narrow beam having a first beam width, and
based on inferring the channel state as the NLoS state, reform the plurality of candidate beams based on a wide beam having a second beam width that is greater than the first beam width.

6. The electronic device of any of claims 1 to 4, wherein the electronic device further comprises at least one sensor,
wherein the processor is further configured to:
infer the channel state as one of a line-of-sight, LoS, state, a non-line-of-sight (NLoS) state including an LoS path, and an NLoS state that does not include the LoS path,
based on inferring the channel state as the LoS state, reform the plurality of candidate beams based on a narrow beam having a first beam width,
based on inferring the channel state as the NLoS state including the LoS path, reform the plurality of candidate beams based on the narrow beam, and
based on inferring the channel state as the NLoS state that does not include the LoS path, reform the plurality of candidate beams based on a wide beam having a second beam width that is greater than the first beam width.

7. The electronic device of claim 6, wherein the processor is further configured to, based on a determination the channel state is changed from the NLoS state including the LoS path to the NLoS state that does not include the LoS path, reform the plurality of candidate beams based on the wide beam.

8. The electronic device of any of claims 1 to 4, wherein the processor is further configured to:
infer the channel state as one of a line-of-sight (LoS) state, a non-line-of-sight (NLoS) state in which an angle of arrival (AoA) range of the signal is less than a first threshold, and an NLoS state in which the AoA range of the signal is greater than or equal to the first threshold,
based on inferring the channel state as the LoS state, reform the plurality of candidate beams based on a narrow beam,
based on inferring the channel state as the NLoS state in which the AoA range of the signal is less than the first threshold, reform the plurality of candidate beams based on a first wide beam covering a first angular range, and
based on inferring the channel state as the NLoS state in which the AoA range of the signal is greater than or equal to the first threshold, reform the plurality of candidate beams based on a second wide beam covering a second angular range that is greater than the first angular range.

9. The electronic device of any of claims 1 to 4, wherein the processor is further configured to:
infer the channel state as one of a line-of-sight (LoS) state, a non-line-of-sight (NLoS) state in which a number of clusters is less than a second threshold, and an NLoS state in which the number of clusters is greater than equal to the second threshold,
based on inferring the channel state as the LoS state, reform the plurality of candidate beams based on a narrow beam having a first beam width,
based on inferring the channel state as the NLoS state in which the number of clusters is less than the second threshold, reform the plurality of candidate beams based on a third wide beam having a second beam width which is greater than the first beam width including a predetermined number of main lobes, and
based on inferring the channel state as the NLoS state in which the number of clusters is greater than or equal to the second threshold, reform the plurality of candidate beams based on a fourth wide beam having a third beam width which is greater than the first beam width including more main lobes than the predetermined number,
wherein the cluster refers to an object that affects a direction of the signal.

10. The electronic device of any preceding claim, wherein the electronic device further comprises at least one sensor,
wherein the processor is further configured to:
infer the channel state as one of a line-of-sight (LoS) state, a non-line-of-sight (NLoS) state including an LoS path, and an NLoS state that does not include the LoS path,
based on inferring the channel state as the LoS state, activate a sensor-aided beam management function to reform the plurality of candidate beams,
based on inferring the channel state as the NLoS state including the LoS path, activate the sensor-aided beam management function to reform the plurality of candidate beams, and
based inferring the channel state as the NLoS state that does not include the LoS path, deactivate the sensor-aided beam management function to reform the plurality of candidate beams, and
wherein the sensor-aided beam management function corresponds to a function of correcting the plurality of candidate beams based on position change data sensed by the at least one sensor in response to a change in position of the electronic device.

11. A method of operating an electronic device, the method comprising:
generating channel characteristic data based on information measured from a plurality of candidate beams for a signal received from a base station;
applying the channel characteristic data to a neural network based on a deep-learning algorithm to infer a channel state between the electronic device and the base station; and
reforming the plurality of candidate beams based on the inferred channel state.

12. The method of claim 11, wherein the channel characteristic data comprises information on at least one of a reference signal received power (RSRP), a power delay profile (PDP), and a channel impulse response (CIR).

13. The method of claim 11 or 12, further comprising:
determining whether channel information is obtained from the channel characteristic data; and
selecting a method of the neural network inferring the channel state based on a result of the determining whether the channel information is obtained from the channel characteristic data.

14. The method of claim 13, wherein the selecting the method of inferring the channel state comprises:
based on determining the channel information corresponding to all channel characteristic data among the channel characteristic data is obtained from the channel characteristic data, selecting a method of classifying a channel class based on the channel information;
based on determining that the channel information corresponding to all channel characteristic data among the channel characteristic data is not obtained from the channel characteristic data, selecting a method of predicting channel information corresponding to the channel characteristic data based on a distribution of the channel characteristic data; and
based on determining the channel information corresponding to partial channel characteristic data among the channel characteristic data is obtained from the channel characteristic data, selecting a method of inferring channel information corresponding to remaining channel characteristic data based on channel information corresponding to the partial channel characteristic data.

15. A method of operating an electronic device, the method comprising:
forming a plurality of candidate beams for performing wireless communication with an external device;
generating, based on information measured from the plurality of candidate beams, first channel characteristic data representing channel characteristics in a spatial domain and second channel characteristic data representing channel characteristics in a time domain;
applying data obtained by combining the first channel characteristic data with the second channel characteristic data in a two-dimensional form to a pre-trained channel state inference model to infer a channel state between the electronic device and the external device; and
reforming the plurality of candidate beams based on the channel state, wherein the first channel characteristic data comprises information on a reference signal received power (RSRP) measured from the plurality of candidate beams,
wherein the second channel characteristic data includes information on one of a power delay profile (PDP) and a channel impulse response (CIR) measured from the plurality of candidate beams.
